# EUROPÄISCHE PATENTSCHRIFT

(11) **EP 3 024 051 B1**
(45) Veröffentlichungstag und Bekanntmachung des Hinweises auf die Patenterteilung: **07.11.2018**
(21) Anmeldenummer: 14194142.7
(22) Anmeldetag: 20.11.2014
(51) Int. Cl.: H01M 2/02, H01M 2/34

(54) **Gehäuse für eine Akkumulatorzelle**
Housing for a rechargeable battery cell
Boîtier d'élément d'accumulateur

(43) Veröffentlichungstag der Anmeldung: 25.05.2016
(73) Patentinhaber: HOPPECKE Batterien GmbH & Co. KG., 59929 Brilon (DE)
(72) Erfinder: Kesper, Heinrich, 34508 Willingen (DE)
(74) Vertreter: Rausch Wanischeck-Bergmann Brinkmann

(56) Entgegenhaltungen:
- DE-U1-202008 007 807
- US-A- 4 732 826
- US-A1- 2011 045 340
- "Sealed lead-acid battery with reduced need for amt. of major material - comprises ribs to cross diagonal lines on battery jar outer wall surface pacing ends of electrode plates", WPI WORLD PATENT INF, 13. Dezember 1996 (1996-12-13), XP002103356,

## Beschreibung

Die Erfindung betrifft ein Gehäuse für eine Akkumulatorzelle, welches einseitig offen und mit einem Deckel verschließbar ausgebildet ist, wobei eine der Gehäuseseitenwände auf ihrer Außenseite eine einstückig mit der Gehäuseseitenwand ausgebildet Rippung mit quer zueinander verlaufenden Rippen aufweist.

Aus dem Stand der Technik vorbekannte Akkumulatoren verfügen über eine Mehrzahl von miteinander elektrisch verschalteten Akkumulatorzellen. Dabei besitzt eine jede Akkumulatorzelle ein Gehäuse, welches einerseits einen Elektrolyten sowie andererseits einander abwechselnd positive und negative Elektrodenplatten aufnimmt, welche Elektrodenplatten zusammen ein Elektrodenplattenpaket bilden. Im endmontierten Zustand ist die offene Gehäuseseite elektrolytdicht mittels eines Gehäusedeckels verschlossen.

Es kommen in typischer Weise je nach gewünschter Ausgangsspannung des Akkumulators 12 Akkumulatorzellen (24 Volt), 24 Zellen (für 48 Volt) oder 40 Zellen (für 80 Volt) zum Einsatz, wobei die Zellen von einem gemeinsamen Bottich, vorzugsweise einem Metallbottich, aufgenommen sind.

Akkumulatoren der vorbeschriebenen Art finden als nicht-stationäre Batterien typischerweise in der Fahrzeugtechnik Verwendung, beispielweise bei Gabelstaplern, Hubwagen und/oder dergleichen.

Das Gehäuse einer Akkumulatorzelle besteht vorzugsweise aus Kunststoff. Es ist aus einem Grundkörper einerseits und einem Deckel andererseits gebildet. Der Grundkörper des Gehäuses ist dabei einseitig offen und mit dem Deckel verschließbar ausgebildet. Er verfügt über vier Wände, zwei Gehäuseseitenwände und zwei Stirnwände und einen Boden. Die Wände, das heißt die Gehäuseseitenwände und die Stirnwände sowie der Boden sind bevorzugterweise einstückig ausgebildet

Es ist aus dem Stand der Technik bekannt, die Gehäuseseitenwände des Akkumulatorzellengehäuses auf ihrer jeweiligen Außenseite mit einer Rippung auszurüsten. Eine solche Rippung bringt den Vorteil mit sich, dass unter gleichzeitiger Materialeinsparung eine Versteifung der Gehäuseseitenwände erreicht ist.

Eine mit einer solchen Rippung ausgerüstete Gehäuseseitenwand ist aus der DE 20 2008 007 807 bekannt. Gemäß dieser vorbekannten Konstruktion ist auf den Außenseiten der Gehäuseseitenwände jeweils eine einstückig damit ausgebildete Rippung vorgesehen, wobei die Rippung über quer zueinander verlaufende Rippen verfügt. Dabei hat die Ausbildung der Rippung auf der Außenseite einer Gehäuseseitenwand gegenüber einer innenseitigen Ausgestaltung den Vorteil, dass es durch den Herstellungsprozess nicht beschränkt möglich ist, auch Rippen ausbilden zu können, die nicht parallel zur deckelseitigen Randkante verlaufen. Die außenseitige Ausgestaltung macht es mithin möglich, in ihrer relativen Ausrichtung zueinander unterschiedlichste Rippenausgestaltungen vorzusehen.

Obgleich sich die vorbekannte Gehäusekonstruktion gemäß der DE 20 2008 007 807 im alltäglichen Praxiseinsatz bewährt hat, besteht Verbesserungsbedarf insbesondere dahingehend, eine noch weitergehende Materialeinsparung zu erreichen. Es ist deshalb die **Aufgabe** der Erfindung, ein nach der DE 20 2008 007 807 gattungsgemäßes Gehäuse dahingehend weiterzuentwickeln, dass bei gleichzeitiger zumindest Beibehaltung der Festigkeit eine Materialeinsparung erreicht ist.

Zur **Lösung** dieser Aufgabe wird mit der Erfindung ein Gehäuse für eine Akkumulatorzelle gemäß Anspruch 1 vorgeschlagen.

Der Erfindung liegt die Erkenntnis zugrunde, dass die auf eine Gehäuseseitenwand des Gehäuses im bestimmungsgemäßen Anwendungsfall einwirkende Belastung in Gehäusehöhenrichtung abnimmt. Mit dem Vorteil einer gegenüber dem Stand der Technik erreichten Materialeinsparung wird mit der Erfindung deshalb vorgeschlagen, die Dicke der Gehäuseseitenwand nicht konstant, sondern in Gehäusehöhenrichtung abnehmend auszubilden. Aufgrund des im bestimmungsgemäßen Verwendungsfalls in Gehäusehöhenrichtung abnehmenden Belastungsprofils führt diese im Unterschied zum Stand der Technik vorgesehene Reduzierung der Gehäuseseitenwanddicke nicht zu einer verminderten Gehäusefestigkeit gegenüber den im bestimmungsgemäßen Verwendungsfall auftretenden Gehäusebelastungen. Dabei wirkt sich der mit der Erfindung erzielte Vorteil der Materialeinsparung mit zunehmender Gehäusedimensionierung in Höhenrichtung umso stärker aus. In anderen Worten: Je größer ein Gehäuse in Höhenrichtung ausgebildet ist, desto stärker kommt der mit der Erfindung erzielte Vorteil der Materialeinsparung zum Tragen.

Die Gehäuseseitenwanddicke kann gemäß einem weiteren Merkmal der Erfindung stetig verlaufend ausgebildet sein. Gemäß dieser Ausgestaltung ist vorgesehen, dass die Gehäuseseitenwanddicke ausgehend vom Gehäuseboden in Richtung auf die dem Gehäuseboden gegenüberliegende Gehäuserandkante stetig abnehmend ausgebildet ist. Die Gehäuseseitenwanddicke nimmt mithin in Höhenrichtung kontinuierlich ab. Es kann beispielsweise vorgesehen sein, dass die Gehäuseseitenwanddicke über ihren gesamten Verlauf in Gehäusehöhenrichtung um 30%, 40% oder 50% reduziert ist. Die insgesamt mögliche Reduzierung der Gehäuseseitenwanddicke in Höhenrichtung hängt nicht zuletzt auch von der Gehäusegröße ab, wobei die mögliche Reduzierung der Gehäuseseitenwanddicke umso größer ist, je größer das Gehäuse in Höhenrichtung ausgebildet ist.

Gemäß der erfindungsgemäßen alternativen Ausgestaltung ist jedoch vorgesehen, dass die Abnahme der Gehäuseseitenwanddicke in Abschnitte unterteilt sprunghaft verlaufend ausgebildet ist. Demnach sind in Gehäusehöhenrichtung Stufen vorgesehen, die Abschnitte mit unterschiedlicher Gehäuseseitenwanddicke bereitstellen. Diese Ausgestaltung ist insbesondere aus fertigungstechnischen Gründen von Vorteil, da die zur Herstellung verwendeten Werkzeuge im Aufbau einfacher ausgestaltet sind. Ferner erlaubt diese Ausgestaltung eine Größenstandardisierung. So hat es sich produktionstechnisch als vorteilhaft herausgestellt, den Grundkörper des Gehäuses mit Bezug auf seine Höhenerstreckung in nur einer Größe auszugestalten, nämlich der bestimmungsgemäß größten Größe, wobei kleinere Größen durch Ablängung des standardisiert hergestellten Grundkörpers ausgestaltet werden können. Die Abschnitte unterschiedlicher Gehäuseseitenwanddicke sind aus diesem Grunde bevorzugterweise in ihrer Höhenerstreckung auf die wünschenswerterweise durch Ablängung auszubildenden Gehäusegrößen abgestimmt. So bilden beispielsweise ein Abschnitt die kleinste Gehäusegröße, zwei Abschnitte die nächstgrößere Gehäusegröße, drei Abschnitte die nächstfolgende Gehäusegröße und so weiter aus.

Zwischen benachbarten Abschnitten unterschiedlicher Gehäuseseitenwanddicke ist gemäß der Erfindung eine parallel zu deckelseitigen Randkante verlaufende Verstärkungsrippe vorgesehen. Diese Verstärkungsrippen sind in Höhenrichtung des Gehäuses genau an den Stellen vorgesehen, an denen zur Ausbildung einer kleineren Gehäusegrundkörpergröße abzulängen ist. Es ist insofern in vorteilhafter Weise möglich, einen standardisierten Herstellungsprozess zu schaffen, demgemäß nur eine Grundkörpergehäusegröße hergestellt wird. Je nach tatsächlich gewünschter Grundkörpergröße kann dann mit Bezug auf die Höhenrichtung des Grundkörpers eine Ablängung desselben erfolgen, wobei an den für eine Ablängung vorgesehenen Stellen des Grundkörpers erfindungsgemäß ausgebildete Verstärkungsrippen vorgesehen sind, so dass grundkörpergrößenunabhängig sichergestellt ist, dass ein im endmontierten Zustand auf den Grundkörper aufgesetzter Deckel aufgrund der grundkörperseitig vorgesehenen Verstärkungsrippe sicher gehalten ist, das heißt eine bestimmungsgemäß sichere Verbindung zwischen Deckel und Grundkörper ausgebildet werden kann. Dabei stellen die Verstärkungsrippen zudem den Übergang von der Gehäuseseitenwanddicke des jeweils in Höhenrichtung unteren Abschnitts auf die im Vergleich hierzu reduzierte Gehäusewanddicke des in Höhenrichtung folgenden oberen Abschnitts dar.

Bevorzugterweise sind die Gehäuseseitenwanddicken innerhalb eines jeweiligen Abschnitts konstant ausgebildet. Dies ist insbesondere aus fertigungstechnischen Gründen von Vorteil, da in ihrem Aufbau vereinfachte Werkzeuge zum Einsatz kommen können. Alternativ kann aber auch vorgesehen sein, dass im jeweiligen Abschnitt eine stetig verlaufende Abnahme der Gehäuseseitenwanddicke vorgesehen ist.

Gemäß einem weiteren Merkmal der Erfindung ist vorgesehen, dass die Rippen und/oder die Verstärkungsrippen mit ihrer gehäuseseitenwandentfernten Rippenstirnfläche innerhalb einer gemeinsamen Ebene liegen. Gemäß diesem Vorschlag der Erfindung ist vorgesehen, dass im Unterschied zum Stand der Technik zwar eine Reduzierung der Gehäuseseitenwanddicke in Gehäusehöhenrichtung vorgesehen ist, nicht aber eine Reduzierung der Dicke der Rippen und/oder der Verstärkungsrippen. Die Rippen und/oder Verstärkungsrippen weisen beispielsweise eine Dicke von 3 mm auf. Die zwischen den Rippen und/oder Verstärkungsrippen liegenden Bereiche der Gehäuseseitenwand sind demgegenüber reduziert ausgebildet und weisen beispielsweise eine maximale Dicke von 2,3 mm auf. Diese Dicke der Gehäuseseitenwand nimmt erfindungsgemäß in Gehäusehöhenrichtung ab, wobei die Dicke der Rippen und/oder Verstärkungsrippen in Gehäusehöhenrichtung gleichbleibend ist. Es wird so trotz einer gegenüber dem Stand der Technik erreichten Materialeinsparung eine insgesamt verbesserte Festigkeit des Gehäuses erreicht. Es ist insoweit eine optimierte Ausgestaltung des Gehäuses gegenüber den im bestimmungsgemäßen Verwendungsfall auftretenden Belastungen erreicht.

Es ist gemäß einem weiteren Merkmal der Erfindung vorgesehen, dass sich an eine Gehäuseseitenwand eine Stirnwand vorzugsweise orthogonal anschließt, die auf ihrer Außenseite eine Verstärkungsstruktur trägt, die in Richtung der Flächennormale der Gehäuseseitenwände hinterschnittsfrei ausgebildet ist.

Nach der Erfindung ist im Unterschied zum gattungsgemäßen Stand der Technik nach der DE 20 2008 007 807 vorgesehen, dass nicht nur wenigstens eine Gehäuseseitenwand, sondern auch die wenigstens eine sich daran anschließende Stirnwand verstärkt ausgebildet ist, wobei erfindungsgemäß eine Verstärkungsstruktur vorgesehen ist, die in Richtung der Flächennormale der Gehäuseseitenwand hinterschnittsfrei ausgebildet ist. Die nach dem Stand der Technik vorbekannte Konstruktion zeigt Stirnwände ohne jegliche Verstärkung, womit die erfindungsgemäße Ausgestaltung eine zusätzliche Versteifung des Gehäuses erbringt.

Die Stirnwand ist mit Bezug auf das eingesetzte Herstellungswerkzeug die sogenannte Entformungswand. Nach einer Herstellung des Gehäuses beispielsweise im Spritzgußverfahren ist dieses aus dem Werkzeug zu entformen. Zu diesem Zweck erfolgt für eine Gehäuseentnahme ein Verfahren der Werkzeughälften, und zwar jeweils in Richtung der Flächennormale der Gehäuseseitenwand, dem die Werkzeughälfte zugeordnet ist. Ein Öffnen des Werkzeuges, das heißt ein Verfahren der Werkzeughälften in dieser Richtung ist aber nur dann möglich, wenn die jeweils zugehörigen Stirnwände eine solche Verfahrbewegung auch zulassen. Aus diesem Grunde ist erfindungsgemäß vorgesehen, die auf der Außenseite der Stirnwand jeweils vorgesehene Verstärkungsstruktur hinterschnittsfrei auszubilden, so dass diese nicht einer Verfahrbewegung der Werkzeughälften entgegensteht.

Aus produktionstechnischen Gründen sind die Stirnwände vorbekannter Gehäuse verstärkungsstrukturfrei ausgebildet, so auch bei der gattungsgemäßen Ausgestaltung nach der DE 20 2008 007 807. Mit der erfindungsgemäßen Ausgestaltung ist erstmals vorgesehen, auch die Stirnwände mit einer Verstärkungsstruktur auszurüsten, was produktionstechnisch dadurch möglich wird, dass nach der Erfindung in vorbeschriebener Weise eine hinterschnittfreie Ausgestaltung vorgesehen ist.

Die mit der Erfindung vorgesehene Verstärkungsstruktur auf den Außenseiten der Stirnwände gestattet es, auch hinsichtlich der Stirnwände eine im Unterschied zum Stand der Technik reduzierte Dickenausgestaltung vorzusehen. Auch insoweit ergibt sich ein gegenüber dem Stand der Technik reduzierter Materialeinsatz.

Gemäß einem ersten Vorschlag der Erfindung ist vorgesehen, dass die Verstärkungsstruktur der Stirnwände Rippen aufweist. Dererlei Rippen sind in ihrer Längsausrichtung in Richtung der Flächennormalen der benachbarten Gehäuseseitenwände auszuführen. Auf diese Weise wird eine hinterschnittfreie Ausgestaltung im vorbeschriebenen Sinn erreicht.

Alternativ kann gemäß einem zweiten Vorschlag der Erfindung vorgesehen sein, dass die Verstärkungsstruktur in Richtung auf die Gehäuseseitenwände spitz zulaufende Verstärkungselemente aufweist. Bei derartigen Verstärkungselementen kann es sich beispielsweise um dreieckförmige Ausgestaltungen handeln. Auch insoweit wird eine hinterschnittfreie Ausgestaltung im vorbeschriebenen Sinn erreicht. Dabei sind je Gehäuseseitenwand auf der jeweils benachbarten Stirnwand entsprechende Dreiecke ausgebildet, die auf diese Gehäuseseitenwand spitz zulaufend ausgebildet sind. Da jede Stirnwand an zwei Gehäuseseitenwände angrenzt, verfügt jede Stirnwand über zwei jeweils in Höhenrichtung ausgebildete Reihen benachbarter Dreiecke, wobei die eine Reihe zur ersten Gehäuseseitenwand und die andere Reihe zur zweiten Gehäuseseitenwand jeweils spitz zulaufende Dreiecke aufweist. Gemäß einer bevorzugten Ausführungsform stoßen die Dreiecke benachbarter Reihen entlang der Mittelachse der Stirnwand aneinander, womit sich in der Kombination zweier aneinanderstoßender Dreiecke eine rautenförmige Ausgestaltung ergibt.

Mit der Erfindung wird insgesamt eine Konstruktion vorgeschlagen, die gegenüber dem Stand der Technik insoweit verbessert ist, als dass hierdurch eine deutliche Materialeinsparung erreicht ist. Diese wird einerseits durch die abnehmende Dicke der Gehäuseseitenwände in Gehäusehöhenrichtung sowie andererseits durch die auf den Stirnwänden vorgesehene Verstärkungsstruktur erreicht. Dabei ist die Gehäusefestigkeit weiter verbessert, nicht zuletzt durch die erstmalig mit der Erfindung vorgesehene Verstärkungsstruktur der Stirnwände.

Weitere Merkmale und Vorteile der Erfindung ergeben sich aus der nachfolgenden Beschreibung anhand der Figuren. Dabei zeigen:
- Fig. 1: in schematisch perspektivischer Darstellung ein Gehäuse nach der Erfindung;
- Fig. 2: in einer Detailansicht das Gehäuse nach Fig. 1;
- Fig. 3: in einer Draufsicht auf eine Gehäuseseitenwand das Gehäuse nach Fig. 1;
- Fig. 4: in einer Draufsicht auf eine Stirnwand das Gehäuse nach Fig. 1;
- Fig. 5: in einer rein schematischen Schnittdarstellung ausschnittsweise eine Gehäuseseitenwand gemäß einer ersten Ausführungsform und
- Fig. 6: in einer rein schematischen Schnittdarstellung ausschnittsweise eine Gehäuseseitenwand gemäß einer zweiten Ausführungsform.

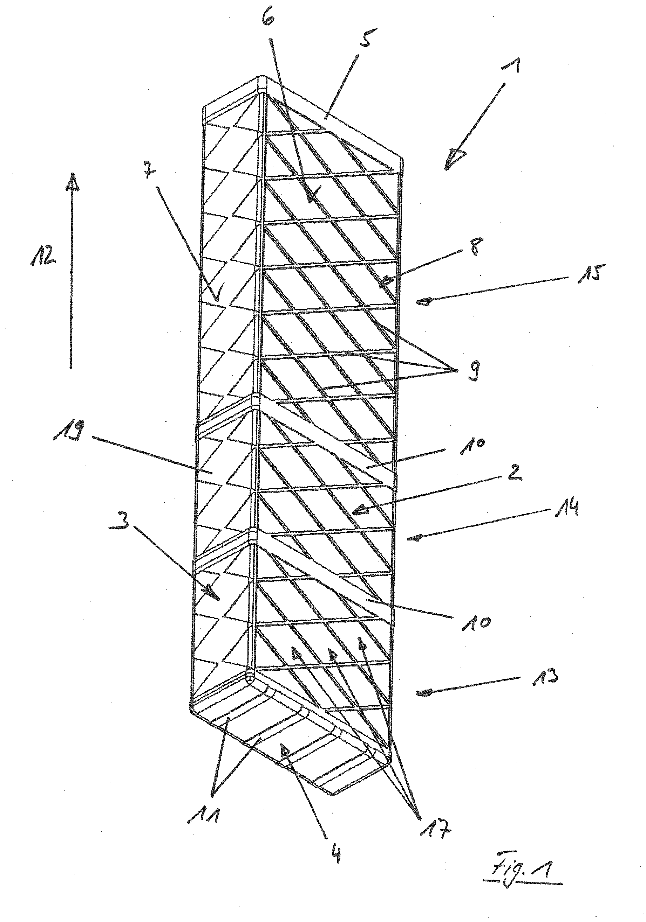

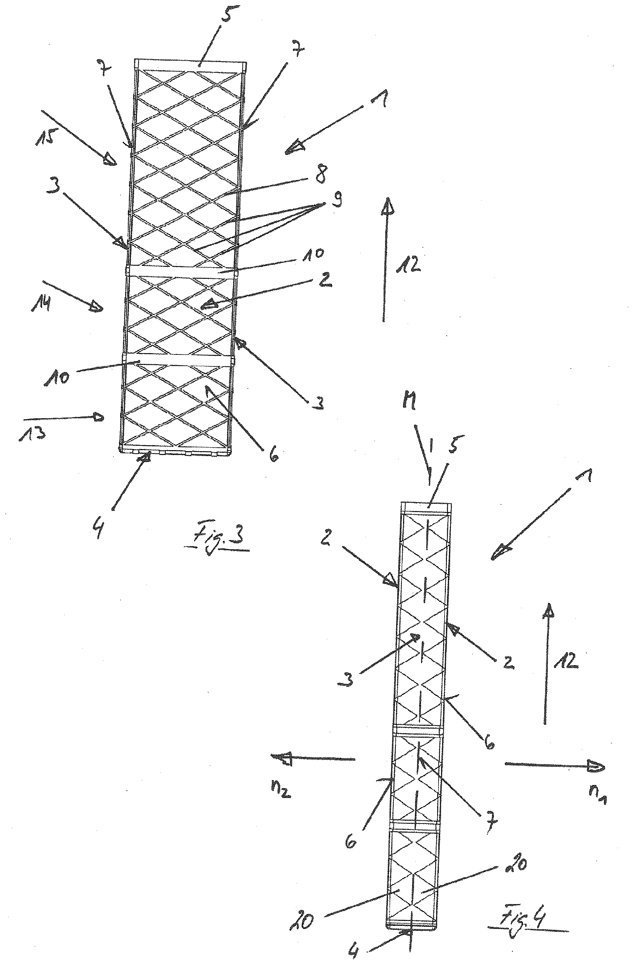

Fig. 1 lässt in schematischer Perspektivdarstellung das erfindungsgemäße Gehäuse 1 erkennen. Das Gehäuse 1 verfügt über einen Grundkörper einerseits und einen in den Figuren nicht näher darstellten Deckel andererseits. Der Grundkörper verfügt, wie eine Zusammenschau der Figuren 1 bis 4 erkennen lässt, über zwei Gehäuseseitenwände 2, zwei Stirnwände 3 sowie einen Boden 4. Die dem Boden 4 gegenüberliegende Seite des Grundkörpers ist offen ausgebildet, welche offene Seite mittels des in den Figuren nicht näher dargestellten Deckels verschließbar ist.

Die Gehäuseseitenwände 2, die Stirnwände 3 sowie der Boden 4 des Grundkörpers definieren einen über die dem Boden 4 gegenüberliegende offene Seite des Grundkörpers zugänglichen Volumenraum, der im bestimmungsgemäßen Verwendungsfall der Aufnahme eines Elektrolyten einerseits sowie einander abwechselnd positive und negative Elektrodenplatten andererseits dient.

Wie Fig. 1 erkennen lässt, verfügen die Gehäuseseitenwände 2 auf ihrer jeweiligen Außenseite 6 über eine Rippung 8. Diese Rippung 8 ist aus quer zueinander verlaufenden Rippen 9 gebildet, die sich jeweils in Kreuzungspunkten kreuzen.

In Gehäusehöhenrichtung 12 sind eine Mehrzahl von parallel zur deckelseitigen Randkante 5 verlaufenden Verstärkungsrippen 10 vorgesehen.

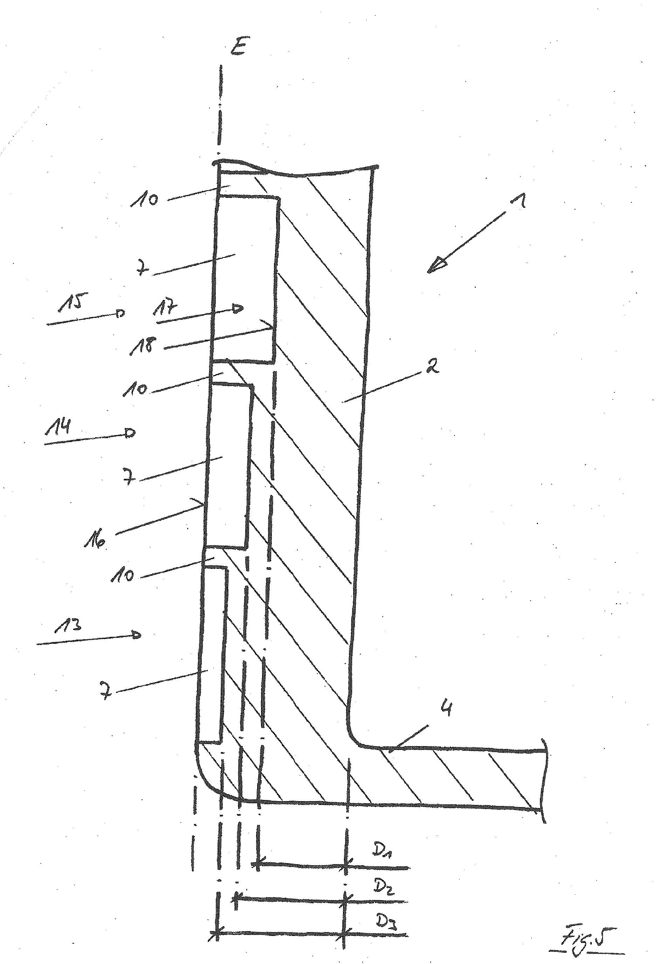

Aufgrund der Verstärkungsrippen 10 ist die jeweilige Gehäuseseitenwand 2 in Abschnitte 13, 14 und 15 unterteilt. Erfindungsgemäß ist die Dicke der jeweiligen Gehäuseseitenwand 2 in den jeweiligen Bereichen 17 zwischen den Rippen 9 in den Abschnitten 13, 14 und 15 unterschiedlich dick ausgebildet, wie sich dies aus der schematischen Schnittdarstellung nach Fig. 5 ergibt. Wie dieser Figur zu entnehmen ist, nimmt die Dicke D der Gehäuseseitenwand 2 in Gehäusehöhenrichtung 12 ab, und zwar über die Abschnitte 13, 14 und 15 sprunghaft, das heißt nicht stetig. Dabei beträgt die Gehäuseseitenwanddicke D im Abschnitt 13 D₃, im Abschnitt 14 D₂ und im Abschnitt 15 D₁, jeweils gemessen vom Bereichsboden 18 zur Innenseite der Gehäuseseitenwand 2.

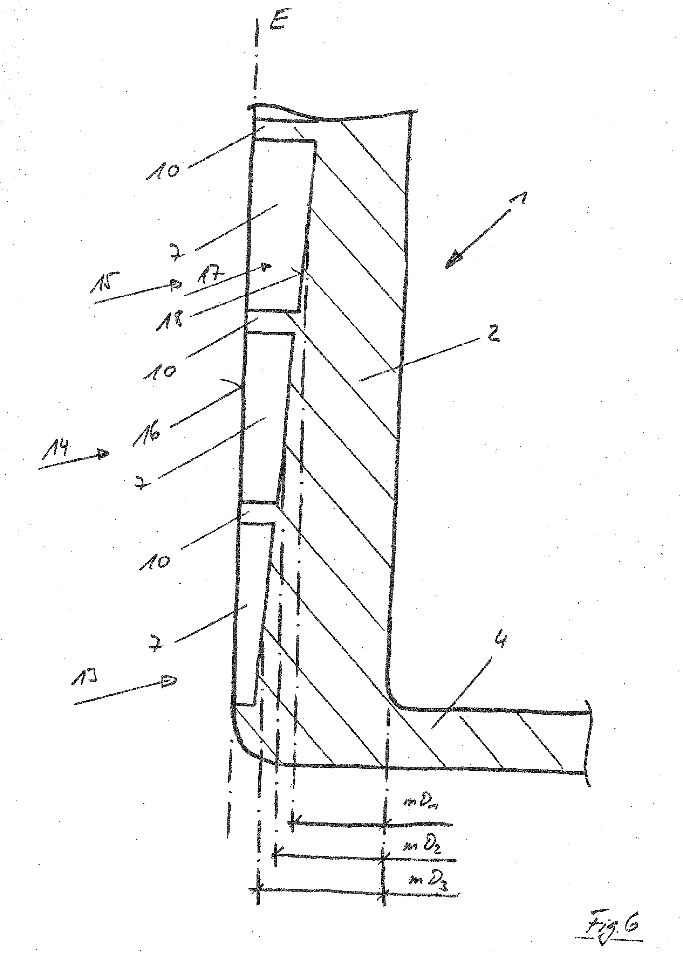

Alternativ zur Ausgestaltung nach Fig. 5 kann auch eine stetig abnehmende Gehäuseseitenwanddicke D vorgesehen sein, wie dies die Darstellung nach Fig. 6 erkennen lässt. Dabei ergeben sich je Abschnitt 13, 14 und 15 gemittelte Gehäuseseitenwanddicken D, und zwar mit Bezug auf Abschnitt 13 mD₃, mit Bezug auf Abschnitt 14 mD₂ und mit Bezug auf Abschnitt 14 mD₁.

Wie die Ausgestaltungen nach den Figuren 5 und 6 jeweils erkennen lassen, ist die Dicke der Rippen 8 beziehungsweise der Verstärkungsrippen 10 gleichbleibend über die gesamte Erstreckung des Gehäuses 1 in Gehäusehöhenrichtung 12. So liegen die Rippenstirnflächen 16 der Rippen 9 und der Verstärkungsrippen 10 in einer Ebene E, die parallel verlaufend zur Innenseite der Gehäuseseitenwand 2 ausgerichtet ist. Die Dicke der Rippen 9 und/oder Verstärkungsrippen 10, das heißt ihrer Erstreckung orthogonal zur Gehäusehöhenrichtung 12 beträgt beispielsweise 3 mm. Die Gehäuseseitenwand 2 ist in den Bereichen 17 zwischen den Rippen 9 und/oder den Verstärkungsrippen 10 in Gehäusehöhenrichtung 12 abnehmend ausgebildet, das heißt D₁ ist gegenüber D₂ beziehungsweise mD₁ ist gegenüber mD₂ und D₂ gegenüber D₃ beziehungsweise mD₂ gegenüber mD₃ jeweils reduziert ausgebildet.

Erfindungsgemäß ist desweiteren vorgesehen, dass die Stirnwände 3 jeweils auf ihrer Außenseite 7 mit einer Verstärkungsstruktur 19 ausgerüstet sind. Diese Verstärkungsstruktur 19 ist ausgehend von der Mittelachse M der jeweiligen Stirnwand 3 in Richtung der jeweils benachbarten Gehäuseseitenwand 2, das heißt in Richtung der jeweiligen Flächennormale n₁ beziehungsweise n₂ hinterschnittfrei ausgebildet. Die beiden Hälften eines Herstellungswerkzeuges können mithin kollisionsfrei in Richtung der jeweiligen Flächennormale verfahren und so für eine Gehäuseentnahme in eine offene Werkzeugstellung verbracht werden.

Im gezeigten Ausführungsbeispiel besteht die Verstärkungsstruktur 19 aus Dreiecken 20, wobei jede Stirnwand 3 mit Bezug auf jede jeweils angrenzende Gehäuseseitenwand 2 eine Reihe von in Gehäusehöhenrichtung 12 übereinander angeordneten Dreiecken 20 vorsieht. Dabei sind die Dreiecke 20 jeweils mit Bezug auf die benachbarte Gehäuseseitenwand 2 spitz zulaufend ausgebildet, womit sich die hinterschnittfreie Ausgestaltung ergibt. An der Mittelachse M stoßen die in Querrichtung benachbarten Dreiecke 20 aneinander, womit sich eine insgesamt rautenförmige Ausgestaltung ergibt.

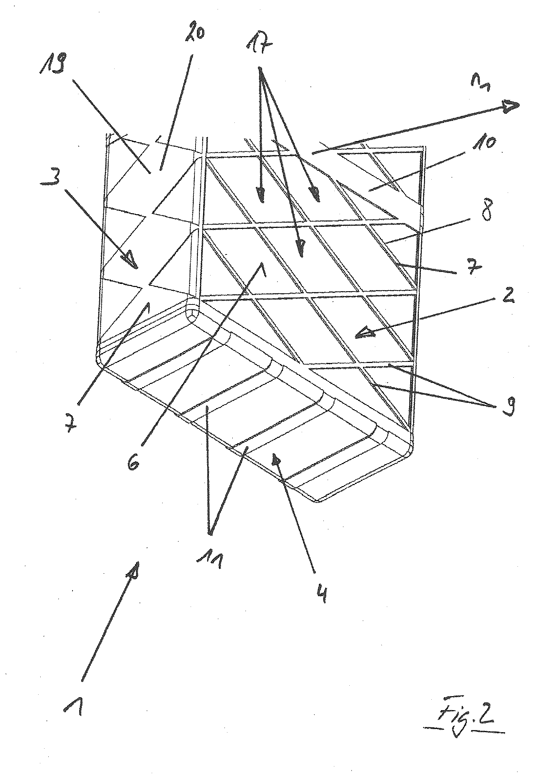

Wie insbesondere die Darstellung nach Fig. 2 erkennen lässt, ist die jeweilige Stirnwand 3 außerhalb der die Verstärkungsstruktur 19 bildenden Dreiecke 20 dickenreduziert ausgebildet, womit sich in vorteilhafter Weise gegenüber dem Stand der Technik eine Materialeinsparung ergibt. Im Bereich der Dreiecke 20 kann beispielsweise eine Wanddicke von 2,8 mm vorgesehen sein, wohingegen im materialreduzierten Bereich nur eine Dicke von 2,3 mm gegeben ist.

Wie Fig. 2 desweiten erkennen lässt, ist auch der Boden 4 auf seiner Außenseite mit Bodenrippen 11 ausgerüstet, was der zusätzlichen Gehäusestabilisierung dient. Dabei sind die Bodenrippen 11 in ihrer Längserstreckung in Richtung der Flächennormalen n₁ beziehungsweise n₂ ausgerichtet, so dass auch insoweit eine hinterschnittfreie Ausgestaltung für die Werkzeughälften eines Herstellungswerkzeugs gegeben ist.

### Bezugszeichenliste

- 1: Gehäuse
- 2: Gehäuseseitenwand
- 3: Stirnwand
- 4: Boden
- 5: Randkante
- 6: Außenseite
- 7: Außenseite
- 8: Rippung
- 9: Rippe
- 10: Verstärkungsrippe
- 11: Bodenrippe
- 12: Gehäusehöhenrichtung
- 13: Abschnitt
- 14: Abschnitt
- 15: Abschnitt
- 16: Rippenstirnfläche
- 17: Bereich
- 18: Bereichsboden
- 19: Verstärkungsstruktur
- 20: Dreieck
- D: Dicke
- mD: mittlere Dicke
- n₁: Flächennormale
- n₂: Flächennormale
- M: Mittelachse

## Patentansprüche

1. Gehäuse für eine Akkumulatorzelle, welches einseitig offen und mit einem Deckel verschließbar ausgebildet ist, wobei eine der Gehäuseseitenwände (2) auf ihrer Außenseite eine einstückig mit der Gehäuseseitenwand (2) ausgebildete Rippung (8) mit quer zueinander verlaufenden Rippen (9) aufweist,
**dadurch gekennzeichnet,**
**dass** die Dicke der Gehäuseseitenwand (2) in Gehäusehöhenrichtung (12) abnimmt, wobei die Abnahme der Gehäuseseitenwanddicke in Abschnitte (13, 14, 15) unterteilt sprunghaft verlaufend ausgebildet ist, wobei zwischen benachbarten Abschnitten (13, 14, 15) unterschiedlicher Gehäuseseitenwanddicke eine parallel zur deckelseitigen Randkante (5) verlaufende Verstärkungsrippe (10) vorgesehen ist, wobei die Rippen (9) und/oder die Verstärkungsrippen (10) in Abhängigkeit der Gehäuseseitenwanddicke unterschiedlich dick ausgebildet sind.

2. Gehäuse nach Anspruch 1, **dadurch gekennzeichnet, dass** die Gehäuseseitenwanddicke innerhalb eines jeweiligen Abschnitts (13, 14, 15) konstant ist.

3. Gehäuse nach einem der vorhergehenden Ansprüche, **dadurch gekennzeichnet, dass** die Rippen (9) und/oder die Verstärkungsrippen (10) mit ihrer Gehäuseseitenwand entfernten Rippenstirnfläche (16) innerhalb einer gemeinsamen Ebene (E) liegen.

4. Gehäuse nach einem der vorhergehenden Ansprüche, **dadurch gekennzeichnet, dass** sich an die Gehäuseseitenwand eine Stirnwand vorzugsweise orthogonal anschließt, die auf ihre Außenseite (7) eine Verstärkungsstruktur (19) trägt, die in Richtung der Flächennormalen (n₁, n₂) der Gehäuseseitenwände (2) hinterschnittsfrei ausgebildet ist.

5. Gehäuse nach Anspruch 4, **dadurch gekennzeichnet, dass** die Verstärkungsstruktur (19) Rippen aufweist.

6. Gehäuse nach Anspruch 4, **dadurch gekennzeichnet, dass** die Verstärkungsstruktur (19) in Richtung auf die jeweils benachbarte Gehäuseseitenwand (2) spitz zulaufende Verstärkungselemente aufweist.

7. Gehäuse nach Anspruch 6, **dadurch gekennzeichnet, dass** die Verstärkungselemente dreieckförmig ausgebildet sind.

## Claims

1. A housing of an accumulator cell, which housing is open on one side and can be closed by a cover, wherein one of the housing side walls (2) comprises, on the outer side thereof, a ribbing (8) having ribs (9) that extend transversely with respect to each other, the ribbing (8) being integrally formed with the housing side wall (2),
**characterized in**
**that** the thickness of the housing side wall (2) decreases in the direction of the housing height, wherein the decrease of the thickness of the housing side wall develops erratically and is divided into sections (13, 14, 15), wherein a reinforcing rib (10) extending parallel to the edge (5) on the side of the cover is provided between adjacent sections (13, 14, 15) of different housing side wall thicknesses, wherein the ribs (9) and/or the reinforcing ribs (10) comprise different thicknesses in dependence on the housing side wall thickness.

2. A housing according to claim 1, **characterized in that** the housing side wall thickness is constant within a respective section (13, 14, 15).

3. A housing according to one of the preceding claims, **characterized in that** the rib front faces (16) distant from the housing side wall of the ribs (9) and/or reinforcing ribs (10) are located within a common plane (E).

4. A housing according to one of the preceding claims, **characterized in that** a front wall is connected to the housing side wall in a preferably orthogonal manner, which front wall comprises a reinforcing structure (19) on the outside (7) thereof, which reinforcing structure (19) is formed without any undercut in the direction of the surface normal (n₁, n₂) of the housing side walls (2).

5. A housing according to claim 4, **characterized in that** the reinforcing structure (19) comprises ribs.

6. A housing according to claim 4, **characterized in that** the reinforcing structure (19) comprises reinforcing elements which taper towards the respectively adjacent housing side wall (2).

7. A housing according to claim 6, **characterized in that** the reinforcing elements comprise a triangular shape.

## Revendications

1. Boîtier d'une cellule d'accumulateur, lequel est ouvert d'un côté et susceptible d'être fermé par un couvercle, l'une des parois latérales de boîtier (2) comprenant, sur sa face extérieure, une structure de nervures (8) ayant des nervures (9), qui s'étendent transversalement les unes aux autres, la structure de nervures (8) étant solidaire de la paroi latérale de boîtier (2),
**caractérisé en ce**
**que** l'épaisseur de la paroi latérale de boîtier (2) diminue dans la direction de la hauteur du boîtier (12), dans lequel la diminution de l'épaisseur de la paroi latérale de boîtier se déroule brusquement par des sections (13, 14, 15), dans lequel une nervure de renforcement (10), qui s'étend parallèlement au bord marginal (5) du côté du couvercle, est prévue entre des sections (13, 14, 15) adjacentes ayant des épaisseurs différentes de la paroi latérale de boîtier, les nervures (9) et/ou les nervures de renforcement (10) comprenant des épaisseurs différentes en fonction de l'épaisseur de la paroi latérale de boîtier.

2. Boîtier selon la revendication 1, **caractérisé en ce que** l'épaisseur de la paroi latérale de boîtier est constante au sein d'une section respective (13, 14, 15).

3. Boîtier selon l'une des revendications précédentes, **caractérisé en ce que** les faces avant de nervures (16), qui sont distantes de la paroi latérale de boîtier, des nervures (9) et/ou des nervures de renforcement (10) se trouvent dans un plan commun (E).

4. Boîtier selon l'une des revendications précédentes, **caractérisé en ce qu'**une paroi frontale se raccorde de préférence orthogonalement à la paroi latérale de boîtier, laquelle paroi frontale porte une structure de renforcement (19) sur sa face extérieure (7), laquelle structure de renforcement (19) est configurée sans contre-dépouille dans la direction de la normale de surface (n₁, n₂) des parois latérales de boîtier (2).

5. Boîtier selon la revendication 4, **caractérisé en ce que** la structure de renforcement (19) comprend des nervures.

6. Boîtier selon la revendication 4, **caractérisé en ce que** la structure de renforcement (19) comprend des éléments de renforcement, qui s'étendent de façon conique dans la direction de la paroi latérale de boîtier respectivement adjacente (2).

7. Boîtier selon la revendication 6, **caractérisé en ce que** les éléments de renforcement sont configurés en forme de triangle.
